# EUROPÄISCHE PATENTSCHRIFT

(11) **EP 2 244 589 B1**
(45) Veröffentlichungstag und Bekanntmachung des Hinweises auf die Patenterteilung: **19.10.2011**
(21) Anmeldenummer: 09712167.7
(22) Anmeldetag: 10.02.2009
(51) Int. Cl.: A23L 1/00, A23L 1/10, A23L 1/20

(54) **VERFAHREN ZUR HERSTELLUNG EINER WÜRZIGEN MISCHUNG SOWIE VERWENDUNG DER WÜRZIGEN MISCHUNG**
PROCESS FOR PRODUCING A SPICY MIXTURE AND ALSO USE OF THE SPICY MIXTURE
PROCÉDÉ DE PRÉPARATION D'UN MÉLANGE ASSAISONNÉ, ET UTILISATION DU MÉLANGE ASSAISONNÉ

(30) Priorität: 20.02.2008 DE 102008010198
(43) Veröffentlichungstag der Anmeldung: 03.11.2010
(73) Patentinhaber: Gebrüder Neeb Gmbh & Co. KG, 82156 Gräfelfing (DE)
(72) Erfinder: RAUTH-LEDERER, Barbara, 82156 Gräfelfing (DE)
(74) Vertreter: Rösler, Uwe
(86) Internationale Anmeldenummer: PCT/DE2009/000180
(87) Internationale Veröffentlichungsnummer: WO 2009/103262

(56) Entgegenhaltungen:
- DE-A1- 2 530 297
- JP-A- 62 146 573
- RYAN E ET AL: "Phytosterol, Squalene, Tocopherol Content and Fatty Acid Profile of Selected Seeds, Grains, and Legumes" PLANT FOODS FOR HUMAN NUTRITION, KLUWER ACADEMIC PUBLISHERS, DO, Bd. 62, Nr. 3, 27. Juni 2007 (2007-06-27), Seiten 85-91, XP019533102 ISSN: 1573-9104

## Beschreibung

### Technisches Gebiet

Die Erfindung bezieht sich auf ein Verfahren zur Herstellung einer würzigen Mischung auf der Basis von Buchweizen sowie der Verwendung der würzigen Mischung.

### Stand der Technik

Buchweizen wird in der Literatur als Pseudogetreide bezeichnet, da Buchweizen botanisch zwar zu den Knöterichgewächsen gehört, aber vergleichbar mit Getreide essbar ist. Die Namensgebung des Buchweizens rührt einerseits von seinen weizenähnlichen Inhaltsstoffen sowie seinem äußeren Erscheinungsbild vergleichbar zu Bucheckern her. Aus ernährungsphysiologischer Sicht ist Buchweizen gegenüber konventionellen Weizensorten wertvoller, zumal Buchweizen über einen weitaus höheren Anteil essentieller Aminosäuren und somit über eine sehr hohe biologische Wertigkeit verfügt. Darüber hinaus ist Buchweizen glutenfrei, wodurch er auch für Sprue- und Zöliaki-Kranke geeignet ist.

Buchweizen in seiner naturbelassenen und geschälten Form wird in an sich bekannter Weise vielfach eingesetzt in Verbindung mit Grützen, Suppen, Bratlingen, Pfannkuchen und Torten, aber auch in gerösteter Form werden die Buchweizenkeme für Müslizubereitungen verwendet. Geröstet entfaltet Buchweizen einen leicht nussigen Geschmack und gemahlen dient er als Zutat in Pfannkuchen, Waffeln und anderen Teig- und Backwaren.

Die bis anhin verwendeten Buchweizenkörner, sei es in naturbelassener oder in vorgerösteter Form, auch als Kascha bezeichnet, sind harte Getreidekörner und stellen ein Ausgangsprodukt für die Weiterverarbeitung zum Erhalt von Lebensmitteln, bspw. durch Mahlprozess o.ä., oder Speisen dar, für die die Buchweizenkömer zumeist einer Quellung in Verbindung mit einer Wasserzugabe unterzogen werden. In diesem Zusammenhang gibt es eine Vielzahl von Rezepturen, in denen Buchweizenkömer als Bestandteil für die Zubereitung von Speisen dient.

Aus der JP 55015784 A ist beispielsweise ein Verfahren entnehmbar, bei dem zur Lebensmittelherstellung geschälte und zerkleinerte Buchweizenkörner einem Röstvorgang unterzogen werden.

Aus der Österreichischen Patentschrift AT 163512 (ausgegeben am 11. Juli 1949, "Verfahren zur Herstellung von cacao- oder schokoladeähnlicher Produkten") geht hervor, dass zum Zwecke der Herstellung cacaoähnlicher Nahrungsmittel u.a. Buchweizen geröstet, getrocknet und gemahlen wird und dem dabei erhaltenen Pulver Cacao beigemischt werden kann.

In JP 62 146573 A ist ein Verfahren beschrieben, bei dem Buchweizenkörner geröstet und so Geschmack und Aroma erzeugt werden.

### Darstellung der Erfindung

Der Erfindung liegt die Aufgabe zugrunde, Buchweizen mit seinen vorstehend erläuterten ernährungsphysiologischen positiven Eigenschaften einer weiteren und breiteren Verwendung im täglichen Lebensmittelbedarf zugänglich zu machen. Insbesondere im Hinblick auf Anforderungen an ökologische Produkte gilt es ein auf Buchweizen basierendes Produkt zu schaffen, das auf jegliche Konservierungsstoffe verzichtet aber dennoch eine möglichst lange Nutzungsdauer ermöglicht. Ferner gilt es dem Aspekt Rechnung zu tragen, dass das auf Buchweizen basierende Produkt sowohl geschmacklichen als auch beim Verzehr haptisch relevanten Anforderungen Rechnung trägt, d.h. das physiologisch wahrnehmbare Verzehrempfinden sollte als angenehm und frisch wahrgenommen werden können.

Die Lösung der der Erfindung zugrunde liegenden Aufgabe ist im Anspruch 1 angegeben. Vorteilhafte Verwendungen des mit dem lösungsgemäßen Verfahren herstellbaren Produktes sind Gegenstand der Ansprüche 14 und 15.

Das der lösungsgemäßen Idee zugrunde liegende Produkt ist eine würzige Mischung, Gewürzmischung bzw. eine Gewürzzubereitung, die auf Basis von geschälten und gerösteten Buchweizenkömem beruht und durch geeigneten Einsatz bzw. Zusatz von Gewürzen individuelle Geschmacksnoten erhält. Durch das lösungsgemäße Herstellverfahren gelingt es die Buchweizenkömer mit einer das physiologisch erfahrbare Verzehrgefühl während des Verzehrs des Produktes bestimmenden Haptik zu versehen, so dass die Buchweizenkömer knackig und kross empfunden werden, wodurch das Produkt neben seinem Hauptanwendungsgebiet als würzige Mischung oder Gewürzzubereitung für Saucen etc. auch als eigenständiger Snack für den unmittelbaren Verzehr zur Verfügung stehen kann.

Das lösungsgemäße Verfahren zur Herstellung einer derartigen würzigen Mischung, die auf Basis von Buchweizen beruht, umfasst die im Weiteren beschriebenen Verfahrensschritte:

Zunächst gilt es geschälte Buchweizenkömer bereitzustellen, die außer dem eigentlichen Schälvorgang keiner weiteren Vorbehandlung bedürfen. Die geschälten Buchweizenkömer werden nach Art einer Röstung erhitzt, wobei die Buchweizenkömer vorzugsweise in ein Röstbehältnis, bspw. in Art einer Röstpfanne, ohne weitere Zusatzmittel gegeben werden, in der sie möglichst schnell und effektiv eine Erhitzung erfahren. Die für diesen Röstvorgang erforderlichen Rösttemperaturen sollten maximal 200°C betragen, wobei darauf zu achten ist, dass die geschälten Buchweizenkörner einer ständigen Durchmischung innerhalb des Röstbehältnisses unterlegen, um röstungsbedingte Degradatioserscheinungen, wie Verbrennungen zu vermeiden. Je nach Menge und eingestellter Rösttemperatur kann dieser erste Röstvorgang einige wenige Minuten betragen, so dass die Buchweizenkömer einen vorgerösteten Zustand erfahren, in dem sie bspw. im Wege einer Handprobe einen heißen bis sehr heißen Temperatureindruck zu vermitteln in der Lage sind.

Die in der vorstehenden Weise vorgerösteten Buchweizenkömer werden nun unter Zugabe eines Speiseöls, vorzugsweise von Sesamöl oder Rapskemöl weiter geröstet, wobei die Rösttemperatur zur Vermeidung der Verbrennung des zuzuführenden Speiseöls reduziert wird. Die Zugabe an Speiseöl erfolgt in einer Menge, mit der eine vollständige Benetzung der Oberflächen sämtlicher Buchweizenkömer gewährleistet ist. Die mit etwas reduzierter Rösttemperatur durchgeführte, schonende Röstung der nun geölten Buchweizenkeme führt nach dem derzeitigen Verständnis dazu, dass die Buchweizenkerne das zugegebene Speiseöl über ihre Oberflächen in das Innere der Körner aufnehmen. Wieder erfolgt der Röstvorgang bei ständigem Umrühren und Durchmischen der Buchweizenkömer innerhalb des Röstbehältnisses und es wird solange Speiseöl in dosierter Form den Buchweizenkömem zugegeben, bis die Kerne nicht mehr in der Lage sind weiteres Öl über ihre jeweiligen Kömeroberflächen aufzunehmen. Haben die Buchweizenkömer im Zuge des Röstvorganges eine goldgelbe Farbe erreicht, ein Zustand, der wie bereits vorstehend erwähnt in Abhängigkeit der zu verarbeitenden Menge an Buchweizenkömer nach ca. zehn Minuten an Röstzeit einstellt, so wird in einem weiteren Verarbeitungsschritt die Rösttemperatur wieder auf maximal 200°C erhöht, wobei unter ununterbrochenem weiteren Durchmischen der Buchweizenkömer eine Salz und/oder Zucker enthaltenen Lösung beigegeben wird. Auch ist es denkbar eine wenigstens ein Aroma enthaltende Lösung beizugeben.

Gilt es bspw. eine salzige Gewürzmischung herzustellen, so wird als salzhaltige Lösung vorzugsweise Ume-Essig verwendet, der vorzugsweise in Form eines Sprays auf die in dem Röstbehältnis befindlichen geölten und gerösteten Buchweizenkömer möglichst homogen flächendeckend aufgebracht wird. Ume-Essig ist ein aus Ume Aprikosen und sog. Shisoblättem gewonnener Extrakt, der alle Nährstoffe von Umeboshi enthält und insbesondere die Darmtätigkeit anregt und die Verdauung unterstützt. Durch den Sprühauftrag des Ume-Essig werden sämtliche im Röstbehältnis vorhandenen, geölten und gerösteten Buchweizenkömer an ihrer Oberfläche benetzt, wobei aufgrund der herrschenden Rösttemperaturen der Flüssiganteil des Ume-Essigs verdampft und zumindest die nicht verdampfbaren Restbestandteile des Ume-Essigs an den Buchweizenkörnern haften bleiben. Aufgrund der in einer großen Vielzahl durchgeführten Röstvorgängen gewonnenen Erkenntnissen wird derzeit davon ausgegangen, dass die salzhaltigen Bestandteile des Ume-Essigs, gleichfalls wie das Öl im vorangegangenen Röstprozess, durch die Oberfläche der Buchweizenkörner in das Innere der Körner eindringen und die Buchweizenkömer auf diese Weise einen salzigen Geschmack regelrecht einverleiben.

Der Vorgang der Sprühbeaufschlagung der im Röstbehältnis unter ständiger Durchmischung befindlichen Buchweizenkömer mit Ume-Essig sollte vorzugsweise mehrfach hintereinander durchgeführt werden, d. h. sobald die Flüssigphase des Ume-Essigs verdampft ist, werden die Buchweizenkörner erneut mit Ume-Essig-Spray beaufschlagt. In Versuchsröstungen hat sich herausgestellt, dass eine drei- bis fünfmalige Wiederholung der Spraybeaufschlagung der gerösteten Buchweizenkömer mit Ume-Essig ausreicht, um eine geschmacklich annehmbare salzige Note der Buchweizenkömer zu erhalten.

Gleichsam dem alleinigen Zusatz von Ume-Essig zum Erhalt salziger Buchweizenkömer ist es möglich durch zusätzliche Zugabe von zuckerhaltigen Lösungen, wie bspw. Reissirup, Dinkelsirup, Ahomsirup, Vollrohrzucker oder ähnliche natürliche Zuckerprodukte, die vorzugsweise auch zur weiteren Verdünnung in geeigneten Lösungsmitteln beigemischt werden können, süße Buchweizenkömer zu gewinnen.

Insbesondere im Falle der Verwendung einer zuckerhaltigen Lösung werden die Oberflächen der einzelnen Buchweizenkörner im Wege einer durch die vorherrschende Rösttemperatur einsetzenden Art von Karamellisierung des beigegebenen Zuckers von einer Zuckerschicht überzogen, wodurch sich die Buchweizenkömer zu Agglomeraten aneinanderfügen. Die Menge des zuzugebenden Zuckers ist vorzugsweise derart bemessen, dass die sich an den Oberflächen der Buchweizenkömer anhaftende Zuckerschicht verhältnismäßig dünn ist, vorzugsweise im Bereich zwischen einigen zehn bis einigen 100 Mikrometer liegt, so dass die innerhalb der Agglomerate sich gegenseitig berührenden Buchweizenkömer lediglich vorzugsweise punktuell berühren. Auf diese Weise bilden sich Buchweisenagglomerate mit einem in den Zwischenräumen vorhandenen großen Luftanteil aus.

In einer besonders vorteilhaften Weise können im Weiteren den Buchweizenagglomeraten getrocknete Früchte oder getrocknete Beeren, wie Aronia- , Sauerkirsch- oder Cranberry-Beeren, sowie auch Heidelbeeren, Preiselbeeren oder Berberizen zugegeben werden, die sich gleichsam als weitere Bestandteile in die Buchweizenagglomerate integrieren.

Schließlich wird der verbleibende Röstvorgang solange fortgesetzt, bis sämtliche Flüssiganteile des jeweiligen Lösungsmittels verdampft sind und die in der vorstehenden Weise behandelten Buchweizenkömer einer abschließenden Verpackung zugeführt werden können. Je nach einzuprägender Geschmacksrichtung bietet es sich an, bspw. die salzigen Buchweizenkörner mit weiteren Gewürzzutaten zu vermengen, wie bspw. Nori-Algen, Bestandteile der Aleo-Vera Pflanze oder Paprika. In dieser Form können die gewürzten Buchweizenkömer einer luftdicht abgeschlossenen Endverpackung zugeführt werden. Selbstverständlich sind auch weitere Zugabevariationen anstelle oder in Kombination mit den vorstehend genannten Beispielen möglich. So bietet sich auch die Zugabe von Bestandteilen aus Obst-, Früchte-, oder Gemüsesorten an.

Durch die vorstehend beschriebene Röstbehandlung der Buchweizenkömer ist es einerseits gelungen die Buchweizenkörner vorzugsweise einer salzigen oder süßen - denkbar sind aber auch bittere oder saure Geschmacksrichtungen, je nach Wahl der verwendeten Aroma haltigen Lösung - Geschmackseinfärbung zu unterziehen, ohne dabei die natürliche Form der Buchweizenkömer zu beeinträchtigen und darüber hinaus eine langzeitstabile Veredelung der einzelnen Buchweizenkömer dergestalt zu schaffen, dass die Körner beim Verzehr einen krossen, knusprigen, Verzehreindruck vermitteln. Diese Eigenschaft eröffnet den in der vorstehenden Weise hergestellten Buchweizenkörner die Möglichkeit auch zum direkten Verzehr, bspw. in Form eines Snacks Verwendung zu finden. Auch im Wege der Zugabe der vorstehend beschriebenen würzigen Mischung, bspw. zu Salatsoßen oder Dressings oder Dips auf Basis von Joghurt, Süß- oder Sauerrahm oder ähnlichen Milchprodukten, behalten die Buchweizenkörner ihre krosse Eigenschaft über längere Zeit bei, bevor sie einem durch das flüssige Medium bedingten Aufweichungsprozess unterliegen.

Auch im Falle der süßen Geschmacksausbildung der vorstehend bezeichneten Gewürzmischung stehen zusätzliche Gewürzstoffe, wie bspw. Zimt, Nelken, Ingwer, Bourbon-Vanille oder ähnliches zur Verfügung, die den Buchweizenkömem beigemengt werden können. Insbesondere die süße Variante der würzigen Mischung erlaubt die Verwendung in Backwaren, Keksen und sonstigen Konditoreiwaren, aber auch die Beigabe zu Cerealien, wie Müsliriegeln o.ä.. Besonders interessante Produkte ergeben sich aus der Verarbeitung von mit einer Zuckerschicht überzogenen Buchweizenkemen, die sich zu Agglomeraten ausbilden, in denen Zutaten, vorzugsweise in Form getrockneter Beeren beigemengt sind. Derartige Produkte können als Müsliriegel oder Snacks in Abhängigkeit von Form und Größe der Agglomerate angeboten werden und können ohne weitere Zugaben und/oder Zubereitung direkt verzehrt werden.

## Patentansprüche

1. Verfahren zur Herstellung einer würzigen Mischung auf der Basis von Buchweizen, umfassend die folgenden Verfahrensschritte:
- Bereitstellen von geschälten Buchweizenkömem und Erhitzen der Buchweizenkömer nach Art einer Röstung zum Erhalt vorgerösteter Buchweizenkömer,
- Zugeben von Speiseöl an die vorgerösteten Buchweizenkörner unter Fortdauer der Röstung derart, dass das Speiseöl in einer Menge den vorgerösteten Buchweizenkömer beigegeben wird, so dass die Buchweizenkömer oberflächig von dem Speiseöl vollständig benetzt werden, und dass die Fortdauer der Röstung solange erfolgt bis die Buchweizenkömer eine durch die Ölaufnahme und die Röstung hervorgerufene goldgelbe Färbung erhalten,
- Zugeben einer Salz, Zucker oder wenigstens ein Aroma enthaltenden Lösung zu den geölten und gerösteten Buchweizenkömem derart, dass die geölten und gerösteten Buchweizenkömer mit der Salz, Zucker oder Aroma enthaltenden Lösung im Wege eines Sprühauftrages oberflächig benetzt werden,
und
- Fortsetzen der Röstung bis zum Erhalt der würzigen Mischung in Form von lösungsmittelfreien, Salz-, Zucker- oder Aroma-haltigen, gerösteten Buchweizenkömem.

2. Verfahren nach Anspruch 1,
**dadurch gekennzeichnet, dass** die Röstung der geschälten Buchweizenkömer in einem Röstbehältnis, insbesondere in Art einer Röstpfanne, erfolgt, ohne Zugabe von Zusatzstoffen bis die geschälten Buchweizenkömer eine Erhitzung erfahren, bei der sie weitgehend keine sichtbaren Degradationserscheingungen zeigen.

3. Verfahren nach Anspruch 1 oder 2,
**dadurch gekennzeichnet, dass** vor und/oder während dem Zugeben des Speiseöls an die vorgerösteten Buchweizenkörner die Rösttemperatur auf eine für das Speiseöl verträgliche Temperatur, bei der das Speiseöl keine Verbrennungserscheinungen zeigt, reduziert wird.

4. Verfahren nach einem der Ansprüche 1 bis 3,
**dadurch gekennzeichnet, dass** als Speiseöl Sesamöl oder Rapskemöl verwendet wird.

5. Verfahren nach einem der Ansprüche 1 bis 4,
**dadurch gekennzeichnet, dass** die Salz, Zucker oder Aroma enthaltende Lösung den geölten Buchweizenkömem bei einer Rösttemperatur von maximal 200 °C beigegeben wird.

6. Verfahren nach einem der Ansprüche 1 bis 5,
**dadurch gekennzeichnet, dass** der Sprühauftrag mehrmals derart wiederholt wird, dass ein weiterer Sprühauftrag durchgeführt wird, sobald das durch den vorhergehenden Sprühauftrag auf die Oberflächen der Buchweizenkörner deponierte Lösungsmittel im Wege Verdampfung vollständig entwichen ist.

7. Verfahren nach einem der Ansprüche 1 bis 6,
**dadurch gekennzeichnet, dass** das Fortsetzen der Röstung bis zum Erhalt der Gewürzzubereitung mit einer reduzierten Rösttemperatur durchgeführt wird, bei der die Salz, Zucker oder Aroma haltigen, gerösteten Buchweizenkömer weitgehend keine röstungsbedingten Degradationen erleiden und der Lösungsmittelanteil vollständig entweicht.

8. Verfahren nach einem der Ansprüche 1 bis 7,
**dadurch gekennzeichnet, dass** die Buchweizenkömer während der Röstung einschließlich der Speiseölzugabe sowie der im Wege des Sprühauftrages erfolgenden Zugabe der Salz, Zucker oder wenigstens ein Aroma enthaltenden Lösung einer Durchmischung unterliegen.

9. Verfahren nach einem der Ansprüche 1 bis 8,
**dadurch gekennzeichnet, dass** als Salz enthaltende Lösung Ume-Essig verwendet wird.

10. Verfahren nach einem der Ansprüche 1 bis 8,
**dadurch gekennzeichnet, dass** als Zucker enthaltende Lösung Reis- oder Dinkelsirup oder eine Reis- oder Dinkelsirup enthaltende Lösung verwendet wird.

11. Verfahren nach einem der Ansprüche 1 bis 10,
**dadurch gekennzeichnet, dass** im Falle der Verwendung einer Zucker enthaltenden Lösung die zugefügte Zuckermenge derart gewählt wird, dass die Buchweizenkörner von einer Zuckerschicht oberflächig überzogen werden, die sich durch die vorherrschenden Rösttemperaturen in einer Art von Karamellisierung des in der Lösung enthaltenden Zuckers derart ausbildet, so dass sich Agglomerate ausbilden, die jeweils eine Vielzahl von über die oberflächige, karamellisierte Zuckerschicht aneinanderhaftenden Buchweizenkömem vorsehen.

12. Verfahren nach einem der Ansprüche 1 bis 11,
**dadurch gekennzeichnet, dass** während und/oder nach Beendigung der Röstung den lösungsmittelfreien, Salz-, Zucker- oder Aroma haltigen, gerösteten Buchweizenkömem weitere Zutaten, insbesondere Nori-Algen, Bestandteile von Aleo-Vera, Paprika oder Beeren beigemengt werden.

13. Verfahren nach Anspruch 12,
**dadurch gekennzeichnet, dass** als Beeren Aronia-Beeren, Sauerkirsch oder Cranberry, Heidelbeeren, Preiselbeeren, Berberizen gewählt wird.

14. Verwendung der würzigen Mischung, die nach dem Verfahren nach einem der Ansprüche 1 bis 13 hergestellt wird, als Würzzugabe an Dips, Saucen, Suppen oder Salaten, oder in Form eines eigenständigen Snacks zum unmittelbaren Verzehr.

15. Verwendung der würzigen Mischung, die nach dem Verfahren nach einem der Ansprüche 1 bis 13 hergestellt wird, als Würzzugabe zu Speisen, Gebäck, Desserts, Mixgetränke, Cerealien oder Cerealienmischungen, insbesondere mit getrockneten Früchten und/oder Nüssen.

## Claims

1. A process for producing a spicy mixture based on buckwheat, comprising the following process steps:
- providing hulled buckwheat grains and heating the buckwheat grains in a manner of roasting in order to obtain pre-roasted buckwheat grains,
- adding edible oil to the pre-roasted buckwheat grains while continuing roasting such that the edible oil is added to the pre-roasted buckwheat grains in an amount sufficient to completely wet the surface of the buckwheat grains and roasting is continued until the buckwheat grains obtain a golden-yellow colouring caused by the absorption of oil and the roasting,
- adding a solution containing salt, sugar or at least one flavouring to the oiled and roasted buckwheat grains such that the oiled and roasted buckwheat grains are completely wetted on their surface with the solution containing salt, sugar or flavouring by way of a spray application, and
- continuing roasting until a spicy mixture is obtained in the form of solvent-free roasted buckwheat grains containing salt, sugar or flavouring.

2. Process according to claim 1,
**characterised in that** roasting of the hulled buckwheat grains takes place in a roasting vessel, in particular a kind of roasting pan without adding additives, until the hulled buckwheat grains have been heated to an extent where they show hardly any visible signs of degradation.

3. Process according to claim 1 or 2,
**characterised in that** during the addition of edible oil to the pre-roasted buckwheat grains the roasting temperature is reduced to a temperature which the edible oil can tolerate and at which the edible oil does not show any signs of burning.

4. Process according to one of claims 1 to 3,
**characterised in that** the edible oil used is sesame oil or rapeseed oil.

5. Process according to one of claims 1 to 4,
**characterised in that** the solution containing salt, sugar or flavouring is added to the oiled buckwheat grains at a roasting temperature of 200°C maximum.

6. Process according to one of claims 1 to 5,
**characterised in that** the spray application is repeated several times such that a further spray application is carried out as soon as the solvent deposited on the surfaces of the buckwheat grains by the previous spray application has completely escaped due to evaporation.

7. Process according to one of claims 1 to 6,
**characterised in that** roasting is continued at a reduced roasting temperature until the spicy preparation is obtained and at which the roasted buckwheat grains containing salt, sugar or flavouring suffer virtually no degradation due to the roasting at this temperature, and the solvent component completely escapes.

8. Process according to one of claims 1 to 7,
**characterised in that** the buckwheat grains are subjected during the roasting to a thorough mixing including the addition of the edible oil and the addition of the solution containing salt, sugar and at least one flavouring by way of a spray application.

9. Process according to one of claims 1 to 8,
**characterised in that** Ume vinegar is used as the solution containing salt.

10. Process according to one of claims 1 to 8,
**characterised in that** rice or spelt syrup or a solution containing rice or spelt syrup is used as the solution containing sugar.

11. Process according to one of claims 1 to 10,
**characterised in that** when using a solution which contains sugar, the added amount of sugar is chosen such that the surfaces of the buckwheat grains are coated by a layer of sugar which is being formed by sort of caramelising the sugar contained in the solution due to the prevailing roasting temperatures so that clusters are formed which are each comprised of a number of buckwheat grains adhering to one another via the superficial caramelised sugar layer.

12. Process according to one of claims 1 to 11,
**characterised in that** during and/or at the end of the roasting further ingredients, in particular nori seaweed, components of aloe vera, paprika or berries are added to the solvent-free buckwheat grains containing salt, sugar or flavouring.

13. Process according to claim 12,
**characterised in that** berries such as aronia berries, sour cherries or cranberries, blueberries, lingonberries or barberries are used.

14. Use of a spicy mixture which is prepared according to the process of one of claims 1 to 13 as a spice additive to dips, sauces, soups or salads or in the form of an independent snack for direct consumption.

15. Use of a spicy mixture which is prepared according to the process of one of claims 1 to 13 as a spice additive to foods, baked goods, desserts, mixed beverages, cereals or cereal mixtures, in particular with dried fruit and/or nuts.

## Revendications

1. Procédé de fabrication d'un mélange épicé à base de sarrasin, comprenant les étapes de procédé suivante consistant à :
- fournir des grains de sarrasin pelés et chauffer les grains de sarrasin à la manière d'une torréfaction pour obtenir des grains de sarrasin pré-torréfiés,
- ajouter de l'huile alimentaire aux grains de sarrasin pré-torréfiés en poursuivant la torréfaction, de telle sorte que l'huile alimentaire soit incorporée dans une quantité des grains de sarrasin pré-torréfiés, de telle sorte que les grains de sarrasin soient complètement humectés en surface par l'huile alimentaire, et que la poursuite de la torréfaction se prolonge jusqu'à ce que les grains de sarrasin acquièrent une coloration jaune doré provoquée par l'absorption d'huile et la torréfaction,
- ajouter une solution contenant du sel, du sucre ou au moins un arome aux grains de sarrasin huilés et torréfiés, de telle sorte que les grains de sarrasin huilés et torréfiés soient humectés en surface avec la solution contenant du sel, du sucre ou au arome au cours d'une application par pulvérisation, et
- poursuivre la torréfaction jusqu'à l'obtention du mélange épicé sous forme de grains de sarrasin torréfiés, contenant du sel, du sucre ou un arome et exempts de la solution.

2. Procédé selon la revendication 1,
**caractérisé en ce que** la torréfaction des grains de sarrasin pelés a lieu dans un récipient de torréfaction, notamment une poèle de torréfaction, sans ajout d'additifs jusqu'à ce que les grains de sarrasin pelés subissent un réchauffement, lors duquel ils ne montrent sensiblement aucune apparition de dégradation visible.

3. Procédé selon la revendication 1 ou 2,
**caractérisé en ce que** avant et/ou pendant l'ajout de l'huile alimentaire aux grains de sarrasin pré-torréfiés, la température de torréfaction est réduite à une température compatible avec l'huile alimentaire, à laquelle l'huile alimentaire ne montre aucune apparition de combustion.

4. Procédé selon une des revendications 1 à 3,
**caractérisé en ce que** comme huile alimentaire on emploie de l'huile de sésame ou de l'huile de colza.

5. Procédé selon une des revendications 1 à 4,
**caractérisé en ce que** la solution contenant du sel, du sucre ou un arome est incorporée aux grains de sarrasin huilés à une température de torréfaction de 200°C au maximum.

6. Procédé selon une des revendications 1 à 5,
**caractérisé en ce que** l'application par pulvérisation est répétée plusieurs fois, de telle sorte qu'une application par pulvérisation supplémentaire soit effectuée, dès que la solution déposée sur les surfaces des grains de sarrasin par l'application par pulvérisation précédente a complètement disparu au cours de l'évaporation.

7. Procédé selon un des revendications 1 à 6,
**caractérisé en ce que** la poursuite de la torréfaction jusqu'à l'obtention de la préparation épicée est effectuée avec une température de torréfaction réduite, à laquelle les grains de sarrasin torréfiés, contenant du sel, du sucre ou un arome ne subissent sensiblement aucune dégradation provoquée par la torréfaction et la solution disparaît complètement.

8. Procédé selon une des revendications 1 à 7,
**caractérisé en ce que** les grains de sarrasin sont soumis à un mélange pendant la torréfaction y compris l'ajout d'huile alimentaire ainsi que l'ajout d'une solution contenant du sel, du sucre ou au moins un arome ayant lieu au cours de l'application par pulvérisation.

9. Procédé selon une des revendications 1 à 8,
**caractérisé en ce que** comme solution contenant du sel on emploie du vinaigre d'umé.

10. Procédé selon une des revendications 1 à 8,
**caractérisé en ce que** comme solution contenant du sucre on emploie du sirop de riz ou d'épeautre ou une solution contenant du riz ou de l'épeautre.

11. Procédé selon une des revendications 1 à 10,
**caractérisé en ce que** dans le cas de l'utilisation d'une solution contenant du sucre la quantité de sucre ajoutée est sélectionnée de telle sorte que les grains de sarrasin soient recouverts en surface par une couche de sucre, qui est réalisée par le biais des températures de torréfaction prédominantes à la manière d'une caramélisation du sucre contenu dans la solution, de sorte que des agglomérats se forment, qui correspondent respectivement à une pluralité de grains de sarrasin collant les uns aux autres sur la couche de sucre caramélisée en surface.

12. Procédé selon une des revendications 1 à 11,
**caractérisé en ce que** pendant et/ou après la fin de la torréfaction, des ingrédients supplémentaires, notamment des algues Nori, des composants de l'aloe vera, du paprika ou des baies sont incorporés aux grains de sarrasin torréfiés, contenant du sel, du sucre ou des aromes, exempts de la solution.

13. Procédé selon la revendication 12,
**caractérisé en ce que** comme baies on choisit des baies d'aronia, des griottes ou cranberries, des myrtilles, des airelles, des baies d'épine-vinette.

14. Utilisation du mélange épicé, qui est fabriqué conformément au procédé selon une des revendications 1 à 13, comme condiment aux crèmes apéritives, sauces, soupes ou salades, ou sous forme de collation individuelle à consommer immédiatement.

15. Utilisation du mélange épicé, qui est fabriqué conformément au procédé selon une des revendications 1 à 13, comme ingrédient aux aliments, pâtisseries, desserts, boissons mixées, céréales ou mélanges de céréales, notamment avec des fruits et/ou noix séchés.
